# EUROPEAN PATENT APPLICATION

(11) **EP 2 990 968 A1**
(43) Date of publication of application: **02.03.2016**
(21) Application number: 15183007.2
(22) Date of filing: 28.08.2015
(51) Int. Cl.: G06F 17/30

(54) **METHOD FOR SELECTING AREA ON WEB PAGE AND ELECTRONIC DEVICE THEREOF**

(30) Priority: 29.08.2014 KR 20140114584
(71) Applicant: Samsung Electronics Co., Ltd., Gyeonggi-do 16677 (KR)
(72) Inventor: CHOI, Yoon-Jeong, Seoul (KR); SONG, Kyo-Sun, Gyeonggi-do (KR); LEE, Ju-Hee, Seoul (KR); JIN, Sung-Hwan, Gyeonggi-do (KR)
(74) Representative: Jenkins, Richard Gavin

(57) **Abstract**

An apparatus and a method for displaying an image in an electronic device are provided. The electronic device includes a display configured to display a web page, an input/output interface configured to detect an input, and a processor configured to identify at least a partial area of the web page corresponding to the input detected through the input/output interface, and change at least a part of construction information of the web page based on the at least partial area. The display is further configured to display to distinguish the at least partial area from a remnant area on the web page, based on the change of the at least part of the construction information of the web page.

## Description

### TECHNICAL FIELD

The present disclosure relates to an apparatus and a method for selecting at least one area of a web page in an electronic device.

### BACKGROUND

With the growth of information telecommunication (IT) technologies and semiconductor technologies, a variety of kinds of electronic devices are evolving into multimedia devices providing various multimedia services. For example, portable electronic devices may provide various multimedia services, such as broadcasting services, wireless Internet services, camera services, music playback services, and the like.

As the use of electronic devices increases, various web pages may be constructed and provide various services to users. For example, the web page may be constructed using programming languages, such as a hypertext markup language (HTML), an extensible markup language (XML), and the like.

A user of an electronic device may search and acquire various information through a web page displayed on a display of the electronic device. Accordingly, the electronic device needs a way for selecting and managing various information needed by the user on the web page.

Therefore, a need exists for an apparatus and a method for selecting at least one area of a web page in an electronic device.

The above information is presented as background information only to assist with an understanding of the present disclosure. No determination has been made, and no assertion is made, as to whether any of the above might be applicable as prior art with regard to the present disclosure.

### SUMMARY

Certain aspects of the present disclosure are to address at least the above-mentioned problems and/or disadvantages and to provide at least the advantages described below. Accordingly, an aspect of the present disclosure is to provide an apparatus and a method for selecting a plurality of areas of a web page in an electronic device.

Another aspect of the present disclosure is to provide an apparatus and a method for managing selected information of a web page in an electronic device.

It is an aim of certain embodiments of the invention to solve, mitigate or obviate, at least partly, at least one of the problems and/or disadvantages associated with the prior art. Certain embodiments aim to provide at least one of the advantages described below.

In accordance with an aspect of the present disclosure, an electronic device is provided. The electronic device includes a display configured to display a web page, an input/output interface configured to detect an input, and a processor configured to identify at least a partial area (or portion) of the web page corresponding to the input detected through the input/output interface, and change at least a part of construction information of the web page based on the at least partial area. The display may be further configured to display to distinguish the at least partial area from a remnant (or remaining) area (or portion) on the web page (i.e. the display may be configured to distinguish the at least partial area from a remaining area on the displayed web page), based on the change of the at least part of the construction information of the web page by the processor. In other words, the display may be arranged to display the web page such that the at least partial area is distinguished (i.e. displayed differently) from the remaining portion of the web page; the at least partial area is displayed in a manner or style different from a manner or style in which the remaining portion of the web page is displayed. The display may thus re-display, refresh, alter, or change the web page to distinguish the at least partial area.

In certain embodiments, the processor is further configured to insert an attribute variable to the construction information of the at least partial area and update an object model, OM, tree, e.g. a DOM tree, of the web page.

In certain embodiments, the processor is further configured to: insert the attribute variable to the construction information of the at least partial area, update the object model tree of the web page, update a render tree of the web page based on the updated object model tree, and render the web page based on the updated render tree, and wherein the processor is further configured to display the web page so as to distinguish the at least partial area to which the attribute variable is inserted from the remnant area on the web page, based on rendering information by the processor.

In certain embodiments, the processor is further configured to: insert a tag for displaying selection information to markup language information of the at least partial area, and update the object model, OM, tree of the web page.

In certain embodiments, the processor is further configured to: identify at least one area to which the attribute variable is inserted, in the OM tree of the web page, extract construction information of the at least one area, and construct one page.

In certain embodiments, the processor is further configured to: extract at least one of display data or hypertext markup language (HTML) information of the at least one area to which the attribute variable is inserted, and construct at least one page.

In certain embodiments, the processor is further configured to: identify at least one area to which the attribute variable is inserted in the OM tree of the web page, and control the display to restrict displaying of the at least one area on the web page displayed on the display.

In certain embodiments, the display is further configured to: reconstruct the web page based on a size of the at least one area of which displaying is restricted by the processor, and display the reconstructed web page.

In certain embodiments, the processor is further configured to: store a construction of the at least partial area in a selection control module of the electronic device, extract construction information of the at least partial area of the web page stored in the selection control module, and construct at least one page.

In accordance with another aspect of the present disclosure, a method for displaying an image in an electronic device is provided. The method includes displaying a web page, identifying at least a partial area of the web page corresponding to an input, changing at least a part of construction information of the web page based on the at least partial area, and displaying to distinguish the at least partial area from a remnant area on the web page, based on the change.

Another aspect of the invention provides a computer program comprising instructions arranged, when executed, to implement a method and/or apparatus in accordance with any one of the above-described aspects. A further aspect provides machine-readable storage storing such a program.

Other aspects, advantages, and salient features of the disclosure will become apparent to those skilled in the art from the following detailed description, which, taken in conjunction with the annexed drawings, discloses various embodiments of the present disclosure.

It will be appreciated from the following description that, in certain embodiments of the invention, features concerning the graphic design of user interfaces are combined with interaction steps or means to achieve a technical effect.

Certain embodiments aim to achieve the technical effect of lowering a burden (e.g. a cognitive, operative, operational, operating, or manipulative burden) of a user when performing certain computer or device interactions.

Certain embodiments aim to achieve the technical effect of providing a more efficient man-machine (user-machine) interface.

### BRIEF DESCRIPTION OF THE DRAWINGS

The above and other aspects, features, and advantages of the certain embodiments of present disclosure will be more apparent from the following description taken in conjunction with the accompanying drawings, in which:
FIG. 1 illustrates a block diagram of an electronic device according to an embodiment of the present disclosure;
FIG. 2 illustrates a block diagram of a program module according to an embodiment of the present disclosure;
FIG. 3 illustrates a software structure of a web engine according to an embodiment of the present disclosure;
FIGS. 4A, 4B, 4C, 4D, 4E, and 4F illustrate screen constructions for selecting an area and managing the selected area on a web page according to various embodiments of the present disclosure;
FIG. 5 illustrates a flowchart for displaying a selected area on a web page according to an embodiment of the present disclosure;
FIG. 6 illustrates a flowchart for displaying a web page according to an embodiment of the present disclosure;
FIG. 7 illustrates a flowchart for extracting information of a selected area on a web page according to an embodiment of the present disclosure;
FIG. 8 illustrates a flowchart for constructing one show page using a selected area of a web page according to an embodiment of the present disclosure;
FIG. 9 illustrates a flowchart for adding a selected area to a show page on a web page according to an embodiment of the present disclosure;
FIG. 10 illustrates a flowchart for saving a show page according to an embodiment of the present disclosure;
FIGS. 11A, 11B, and 11C illustrate screen constructions to hide displaying of a selected area on a web page according to various embodiments of the present disclosure;
FIG. 12 illustrates a flowchart to hide displaying of a selected area on a web page according to an embodiment of the present disclosure; and
FIG. 13 illustrates a block diagram of an electronic device according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, it those of ordinary skill in the art will recognize that various changes and modifications of the various embodiments described herein can be made without departing from the scope and spirit of the present disclosure. In addition, descriptions of well-known functions and constructions are omitted for clarity and conciseness.

The terms and words used in the following description and claims are not limited to the bibliographical meanings, but are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

The terms "have", "may have", "include", or "may include" used in the various embodiments of the present disclosure indicate the presence of disclosed corresponding functions, operations, elements, and the like, and do not limit additional one or more functions, operations, elements, and the like. In addition, it should be understood that the terms "include" or "have" used in the various embodiments of the present disclosure are to indicate the presence of features, numbers, operations, elements, parts, or a combination thereof described in the specifications, and do not preclude the presence or addition of one or more other features, numbers, operations, elements, parts, or a combination thereof.

The terms "A or B", "at least one of A or/and B" or "one or more of A or/and B" used in the various embodiments of the present disclosure include any and all combinations of words enumerated with it. For example, "A or B", "at least one of A and B" or "at least one of A or B" describes (1) including at least one A, (2) including at least one B, or (3) including both at least one A and at least one B.

Although the term, such as "first" and "second" used in various embodiments of the present disclosure may modify various elements of various embodiments of the present disclosure, these terms do not limit the corresponding elements. For example, these terms do not limit an order and/or importance of the corresponding elements. These terms may be used for the purpose of distinguishing one element from another element. For example, a first user device and a second user device all indicate user devices and may indicate different user devices. For example, a first element may be named a second element without departing from the scope of right of various embodiments of the present disclosure, and similarly, a second element may be named a first element.

It will be understood that when an element (e.g., a first element) is "connected to" or "(operatively or communicatively) coupled with/to" to another element (e.g., a second element), the element may be directly connected or coupled to another element, and there may be an intervening element (e.g., a third element) between the element and another element. To the contrary, it will be understood that when an element (e.g., the first element) is "directly connected" or "directly coupled" to another element (e.g., the second element), there is no intervening element (e.g., the third element) between the element and another element.

The expression "configured to (or set to)" used in various embodiments of the present disclosure may be replaced with "suitable for", "having the capacity to", "designed to", " adapted to", "made to", or "capable of" according to a situation. The term "configured to (set to)" does not necessarily indicate "specifically designed to" in a hardware level. Instead, the expression "apparatus configured to..." may indicate that the apparatus is "capable of..." along with other devices or parts in a certain situation. For example, "a processor configured to (set to) perform A, B, and C" may be a dedicated processor, e.g., an embedded processor, for performing a corresponding operation, or a generic-purpose processor, e.g., a central processing unit (CPU) or an application processor (AP), capable of performing a corresponding operation by executing one or more software programs stored in a memory device.

The terms as used herein are used merely to describe certain embodiments and are not intended to limit the present disclosure. Further, all the terms used herein, including technical and scientific terms, should be interpreted to have the same description as commonly understood by those skilled in the art to which the present disclosure pertains, and should not be interpreted to have ideal or excessively formal description unless explicitly defined in various embodiments of the present disclosure.

The module or program module according to various embodiments of the present disclosure may further include at least one or more constitutional elements among the aforementioned constitutional elements, or may omit some of them, or may further include additional other constitutional elements. Operations performed by a module, programming module, or other constitutional elements according to various embodiments of the present disclosure may be executed in a sequential, parallel, repetitive, or heuristic manner. In addition, some of the operations may be executed in a different order or may be omitted, or other operations may be added.

An electronic device according to various embodiments of the present disclosure may be a device. For example, the electronic device according to various embodiments of the present disclosure may include at least one of a smart phone, a tablet personal computer (PC), a mobile phone, a video phone, an e-book reader, a desktop PC, a laptop PC, a netbook computer, a workstation, a server, a personal digital assistant (PDA), a portable multimedia player (PMP), an motion picture experts group (MPEG-1 or MPEG-2) audio layer 3 (MP3) player, a mobile medical device, a camera, or a wearable device (e.g., a head-mounted-device (HMD), an electronic glasses, an electronic clothing, an electronic bracelet, an electronic necklace, an electronic appcessory, an electronic tattoo, a smart mirror, a smart watch, and the like).

In various embodiments of the present disclosure, an electronic device may be a smart home appliance. For example, of such appliances may include at least one of a television (TV), a digital versatile disk (DVD) player, an audio component, a refrigerator, an air conditioner, a vacuum cleaner, an oven, a microwave oven, a washing machine, an air cleaner, a set-top box, a home automation control panel, a security control panel, a TV box (e.g., Samsung HomeSync^{®}, Apple TV^{®}, or Google TV), a game console (e.g., Xbox^{®} PlayStation^{®}), an electronic dictionary, an electronic key, a camcorder, an electronic frame, and the like.

In various embodiments of the present disclosure, an electronic device may include at least one of a medical equipment (e.g., a mobile medical device (e.g., a blood glucose monitoring device, a heart rate monitor, a blood pressure monitoring device, a temperature meter, and the like), a magnetic resonance angiography (MRA) machine, a magnetic resonance imaging (MRI) machine, a computed tomography (CT) scanner, an ultrasound machine, and the like), a navigation device, a global positioning system (GPS) receiver, an event data recorder (EDR), a flight data recorder (FDR), an in-vehicle infotainment device, an electronic equipment for a ship (e.g., a ship navigation equipment and/or a gyrocompass), an avionics equipment, a security equipment, a head unit for vehicle, an industrial or home robot, an automatic teller machine (ATM) of a financial institution, point of sale (POS) device at a retail store, or an internet of things device (e.g., a lightbulb, various sensors, an electronic meter, a gas meter, a sprinkler, a fire alarm, a thermostat, a streetlamp, a toaster, a sporting equipment, a hot-water tank, a heater, a boiler, and the like).

In certain embodiments of the present disclosure, an electronic device may include at least one of a piece of furniture or a building/structure, an electronic board, an electronic signature receiving device, a projector, and various measuring instruments (e.g., a water meter, an electricity meter, a gas meter, a wave meter, and the like).

An electronic device according to various embodiments of the present disclosure may also include a combination of one or more of the above-mentioned devices.

Further, it will be apparent to those skilled in the art that an electronic device according to various embodiments of the present disclosure is not limited to the above-mentioned devices.

Herein, the term "user" may indicate a person who uses an electronic device or a device (e.g., an artificial intelligence electronic device) that uses the electronic device.

Below, a description may be made for a technology for selection of at least one area of a web page in an electronic device according to various embodiments of the present disclosure.

In various embodiments of the present disclosure below, a web page may represent contents of which at least a partial area consists of a plurality of tags (i.e., symbols indicating instructions) through programming languages, such as a hypertext markup language (HTML), an extensible markup language (XML), and the like. According to an embodiment of the present disclosure, the web page may include contents (e.g., a word document and a portable document format (PDF) document) constructed in a format of an electronic document.

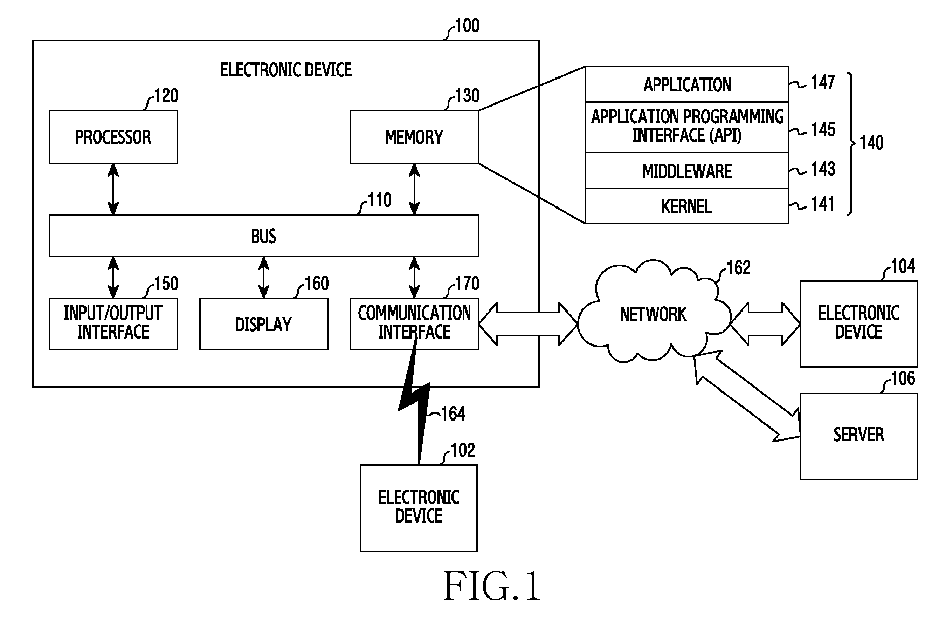

FIG. 1 is a block diagram of an electronic device according to an embodiment of the present disclosure.

Referring to FIG. 1, an electronic device 100 may include a bus 110, a processor 120, a memory 130, an input/output interface 150, a display 160, and a communication interface 170. According to various embodiments of the present disclosure, at least one of the components of the electronic device 100 may be omitted, or other components may be additionally included in the electronic device 100.

The bus 110 may be a circuit that connects the processor 120, the memory 130, the input/output interface 150, the display 160, or the communication interface 170 and transmits communication (e.g., control messages) between the above described components.

The processor 120 may construct a web page for displaying on the display 160 using a web page document stored in the memory 130 or provided from an external device (e.g., a first external electronic device 102, a second external electronic device 104, or a server 106) through the communication interface 170. For example, the processor 120 may parse the web page document (e.g., an HTML document) to create an object model tree (e.g. a Document Object Model (DOM) tree) for tags constructing the web page. It will be appreciated that the Document Object Model (DOM) is a cross-platform and language-independent convention for representing and interacting with objects, particularly objects in HTML, XHTML, and XML documents. The nodes of every document are organized in a tree structure, called the DOM tree. More particularly, the DOM is a W3C (World Wide Web Consortium) standard. The DOM defines a standard for accessing documents. The W3C Document Object Model (DOM) is a platform and language-neutral interface that allows programs and scripts to dynamically access and update the content, structure, and style of a document. The DOM is a model which specifies how documents are represented as objects, so that they may be used in object oriented programs. The processor 120 may parse a style element of the web page to create a render tree. The processor 120 may control the display 160 to display the web page through rendering using the render tree.

According to an embodiment of the present disclosure, if detecting an input for selection of at least a partial area of a web page through the input/output interface 150, the processor 120 may insert an attribute variable (e.g., a tag) for displaying selection information, to an object model tree (e,g, a DOM tree) for the area where the input is detected.

According to an embodiment of the present disclosure, if detecting an input for selection of at least a partial area of a web page through the input/output interface 150, the processor 120 may control to update a render tree and display the area where the input is detected. To display the selection of a plurality of areas, the processor 120 may insert an attribute variable (e.g., a tag) for displaying selection information, to a DOM tree for the area where the input is detected.

According to an embodiment of the present disclosure, the processor 120 may store web page construction information (e.g., HTML information of an area where an input is detected) in a selection control module. For example, the processor 120 may store an attribute variable (e.g., a tag) for displaying selection information and web page construction information in the selection control module. For instance, the selection control module may exist in at least one position of the internal or external of a web engine which consists of software constructing and driving a web page.

According to an embodiment of the present disclosure, the processor 120 may extract web page construction information of at least one selected area, and construct a show page. For example, the processor 120 may search a DOM tree for an attribute variable for displaying selection information, and identify at least one selected area. The processor 120 may extract the web page construction information of the at least one selected area, and create the show page. For example, the processor 120 may use the web page construction information of the at least one selected area stored in the selection control module, and create the show page. For instance, the show page may represent separate contents constructed to include at least a part of the web page construction information of the at least one area such that a user can identify the web page construction information of the at least one area selected by the user. The show page may include an electronic document including display data (e.g., image data, text data, and the like) included in at least one selected area, or an HTML-type document including HTML information (e.g., a tag, a script, and the like) included in the at least one selected area.

According to an embodiment of the present disclosure, the processor 120 may reconstruct a web page to hide the displaying of at least one selected area on the web page displayed on the display 160.

The memory 130 may include a volatile memory and/or a non-volatile memory. The memory 130 may store, for example, instructions or data (e.g., image data) relevant to at least one other element of the electronic device 100. According to an embodiment of the present disclosure, the memory 130 may store software and/or a program 140. The program 140 may include, for example, a kernel 141, middleware 143, an application programming interface (API) 145, and/or application programs (or "applications") 147. At least some of the kernel 141, the middleware 143, and the API 145 may be referred to as an operating system (OS).

The kernel 141 may control or manage system resources (e.g., the bus 110, the processor 120, or the memory 130) used for performing an operation or function implemented by the other programs (e.g., the middleware 143, the API 145, or the application programs 147). Furthermore, the kernel 141 may provide an interface through which the middleware 143, the API 145, or the application programs 147 may access the individual elements of the electronic device 100 to control or manage the system resources.

The middleware 143, for example, may function as an intermediary for allowing the API 145 or the application programs 147 to communicate with the kernel 141 to exchange data.

In addition, the middleware 143 may process one or more task requests received from the application programs 147 according to priorities thereof. For example, the middleware 143 may assign priorities for using the system resources (e.g., the bus 110, the processor 120, the memory 130, and the like) of the electronic device 100, to at least one of the application programs 147. For example, the middleware 143 may perform scheduling or loading balancing on the one or more task requests by processing the one or more task requests according to the priorities assigned thereto.

The API 145 is an interface through which the applications 147 control functions provided from the kernel 141 or the middleware 143, and may include, for example, at least one interface or function (e.g., an instruction) for file control, window control, image processing, text control, and the like.

The input/output interface 150, for example, may function as an interface that may transfer instructions or data input from a user or another external device to the other element(s) of the electronic device 100. Furthermore, the input/output interface 150 may output the instructions or data received from the other element(s) of the electronic device 100 to the user or another external device.

The display 160 may include, for example, a liquid crystal display (LCD), a light emitting diode (LED) display, an organic LED (OLED) display, a micro electro mechanical system (MEMS) display, an electronic paper display, and the like. The display 160, for example, may display various types of content (e.g., a text, images, videos, icons, symbols, and the like) for the user. The display 160 may include a touch screen and receive, for example, a touch, a gesture, proximity, a hovering input, and the like, using an electronic pen or the user's body part. According to an embodiment of the present disclosure, the display 160 may display a web page.

The communication interface 170, for example, may set communication between the electronic device 100 and an external device (e.g., the first external electronic device 102, the second external electronic device 104, or the server 106). For example, the communication interface 170 may be connected to a network 162 through wireless or wired communication to communicate with the external device (e.g., the second external electronic device 104 or the server 106).

The wireless communication may use at least one of, for example, long term evolution (LTE), LTE-advance (LTE-A), code division multiple access (CDMA), wideband CDMA (WCDMA), universal mobile telecommunications system (UMTS), wireless broadband (WiBro), and global system for mobile communications (GSM), as a cellular communication protocol. In addition, the wireless communication may include, for example, a short range communication 164. The short-range communication 164 may include at least one of, for example, wireless fidelity (Wi-Fi), bluetooth (BT), near field communication (NFC), and GPS.

The wired communication may include at least one of, for example, a universal serial bus (USB), a high definition multimedia interface (HDMI), recommended standard-232 (RS-232), and a plain old telephone service (POTS).

The network 162 may include at least one of a communication network, such as a computer network (e.g., a local area network (LAN) or a wide area network (WAN)), the Internet, a telephone network, and the like.

Each of the first external electronic device 102 and the second external electronic device 104 may be a device which is the same as or different from the electronic device 100. According to an embodiment of the present disclosure, the server 106 may include a group of one or more servers. According to various embodiments of the present disclosure, all or a part of operations performed in the electronic device 100 can be performed in the other electronic device or multiple electronic devices (e.g., the first external electronic device 102 or the second external electronic device 104 or the server 106). According to an embodiment of the present disclosure, when the electronic device 100 should perform some functions or services automatically or by a request, the electronic device 100 may make a request for performing at least some functions related to the functions or services to another device (e.g., the first external electronic device 102 or the second external electronic device 104, or the server 106) instead of performing the functions or services by itself or additionally. Another electronic device (e.g., the first external electronic device 102 or the second external electronic device 104, or the server 106) may perform a function requested from the electronic device 100 or an additional function and transfer the performed result to the electronic device 100. The electronic device 100 can provide the requested function or service to another electronic device by processing the received result as it is or additionally. To this end, for example, cloud computing, distributed computing, or client-server computing technology may be used.

According to various embodiments of the present disclosure, the electronic device 100 may use at least one module operatively or physically separated from the processor 120 to construct a web page, and insert information about a selected area of the web page, and manage the information of the selected area.

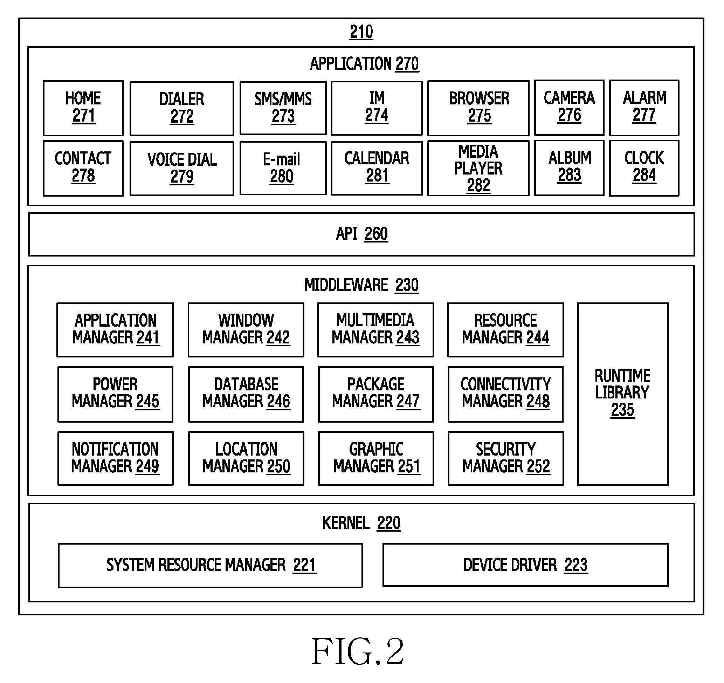

FIG. 2 illustrates a block diagram of a program module according to an embodiment of the present disclosure.

Referring to FIG. 2, according to an embodiment of the present disclosure, a program module 210 (e.g., a program 140) may include an OS for controlling resources associated with an electronic device (e.g., the electronic device 100) and/or various applications (e.g., an application program 147) running on the operating system. The OS may be, for example, Android, iOS, Windows, Symbian, Tizen, Bada, and the like.

The programming module 210 may include a kernel 220, middleware 230, an API 260, and/or an application 270. At least a part of the program module 210 can be preloaded on the electronic device (e.g., electronic device 100) or downloaded from the server.

The kernel 220 (e.g., the kernel 141) may include, for example, a system resource manager 221 or a device driver 223. The system resource manager 221 may control, allocate, or collect the system resources. According to an embodiment of the present disclosure, the system resource manager 221 may include a process management unit, a memory management unit, a file system management unit, and the like. The device driver 223 may include, for example, a display driver, a camera driver, a BT driver, a shared-memory driver, a USB driver, a keypad driver, a Wi-Fi driver, an audio driver, an interprocess communication (IPC) driver, and the like. According to an embodiment of the present disclosure, a Wi-Fi driver of the kernel 220 may control at least one of an antenna mode or a transmission period of a network control message for use to transmit and receive signals to and from the communication interface 170.

The middleware 230 may provide, for example, a function commonly required by the applications 270 in common or provide various functions to the applications 270 through the API 260 so that the applications 270 can efficiently use limited system resources within the electronic device. According to an embodiment of the present disclosure, the middleware 230 (e.g., the middleware 143) may include, for example, at least one of a runtime library 235, an application manager 241, a window manager 242, a multimedia manager 243, a resource manager 244, a power manager 245, a database manager 246, a package manager 247, a connectivity manager 248, a notification manager 249, a location manager 250, a graphic manager 251, and a security manager 252.

The runtime library 235 may include, for example, a library module that a compiler uses to add new functions through a programming language while the application 270 is executed. The run time library 235 may perform input/output management, memory management, or a function for an arithmetic function.

The application manager 241 may manage, for example, a life cycle of at least one of the applications 270. The window manager 242 may manage graphical user interface (GUI) resources used by a screen. The multimedia manager 243 may grasp formats required for the reproduction of various media files, and may perform an encoding or decoding of the media file by using a codec suitable for the corresponding format. The resource manager 244 may manage resources, such as a source code, a memory, and a storage space of at least one of the applications 270.

The power manager 245 may operate together with a basic input /output system (BIOS) to manage a battery or power and may provide power information required for the operation of the electronic device. The database manager 246 may generate, search for, or change a database to be used by at least one of the applications 270. The package manager 247 may manage the installation or the updating of applications distributed in the form of package file.

The connectivity manager 248 may manage wireless connection of, for example, Wi-Fi or BT. The notification manager 249 can display or notify of an event, such as an arrival message, a promise, a proximity notification, and the like, in such a way that does not disturb a user. The location manager 250 may manage location information of the electronic device. The graphic manager 251 may manage graphic effects to be provided to a user and user interfaces related to the graphic effects. The security manager 252 may provide all security functions required for system security or user authentication.

According to an embodiment of the present disclosure, the middleware 230 may control at least one of the transmission period of an antenna mode or a transmission period of a network control message for use to transmit and receive signals to and from the communication interface 170 by using at least one manager.

According to an embodiment of the present disclosure, when the electronic device (e.g., electronic device 100) has a call function, the middleware 230 may further include a telephony manager for managing a voice call function or a video call function of the electronic device.

The middleware 230 may include a middleware module for forming a combination of various functions of the aforementioned components. The middleware 230 may provide modules specialized according to types of operating systems in order to provide differentiated functions. Further, the middleware 230 may dynamically remove some of the existing components or add new components.

The API 260 (e.g., the API 145) is, for example, a set of API programming functions, and a different configuration thereof may be provided according to an operating system. For example, with respect to each platform, one API set may be provided in a case of Android or iOS, and two or more API sets may be provided in a case of Tizen.

The applications 270 (e.g., the application programs 147) may include, for example, one or more applications which can provide functions, such as a home function 271, a dialer 272, an SMS/MMS 273, an instant message (IM) 274, a browser 275, a camera 276, an alarm 277, contacts 278, a voice dialer 279, an email 280, a calendar 281, a media player 282, an album 283, a clock 284, a healthcare function (e.g., to measure exercise burnt calorie, or blood sugar), or an environment information (e.g., an atmospheric pressure, humidity, temperature information, and the like).

According to an embodiment of the present disclosure, the application 270 may include an application (hereinafter, for convenience of explanation, "Information Exchange application") that supports the exchange of information between the electronic device (e.g., the electronic device 100) and the external electronic device. The application associated with exchanging information may include, for example, a notification relay application for notifying an external electronic device of certain information or a device management application for managing an external electronic device.

For example, a notification relay application may include a function of transferring the notification information generated by other applications (e.g., an SMS/MMS application, an e-mail application, a healthcare application, an environmental information application, and the like) of the electronic device to the external electronic device. Further, the notification relay application may receive notification information from, for example, the external electronic device and provide the received notification information to the user. For example, the device management application may manage (e.g., install, delete, or update) at least one function (e.g., turning on/off the external electronic device itself (or some elements thereof) or adjusting the brightness (or resolution) of a display) of the external electronic device communicating with the electronic device, applications operating in the external electronic device, or services (e.g., a telephone call service or a message service) provided from the external electronic device.

According to an embodiment of the present disclosure, the application 270 may include an application (e.g., a health management application) specified according to an attribute (e.g., as an attribute of the electronic device, the type of electronic device is a mobile medical equipment) of the external electronic device. According to an embodiment of the present disclosure, the application 270 may include an application received from the external electronic device (e.g., a server, an electronic device, and the like). According to an embodiment of the present disclosure, the applications 270 may include a preloaded application or a third party application which can be downloaded from the server. The names of the elements of the program module 210, according to the embodiment illustrated in FIG. 2, may vary according to the type of operating system.

According to various embodiments of the present disclosure, at least a part of the programming module 210 may be implemented in software, firmware, hardware, or a combination of two or more thereof. At least a part of the program module 210 can be implemented (e.g., executed), for example, by a processor (e.g., by an application program). At least some of the programming module 210 may include, for example, a module, program, routine, sets of instructions, or process for performing one or more functions.

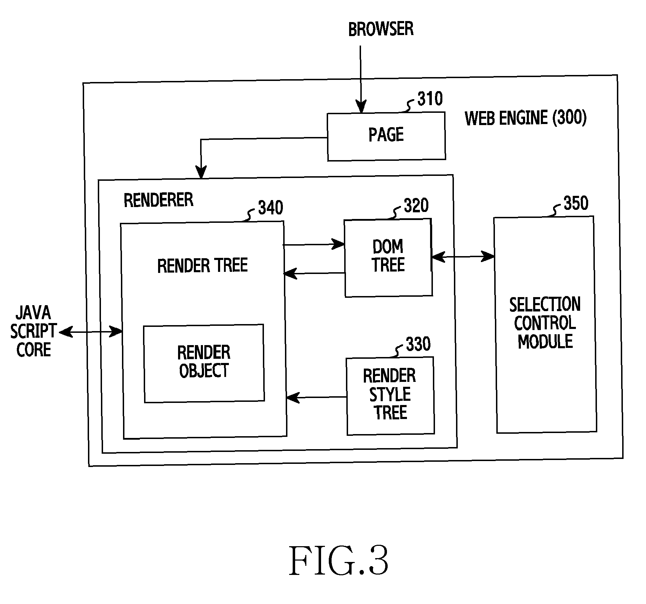

FIG. 3 illustrates a software structure of a web engine according to an embodiment of the present disclosure.

Referring to FIG. 3, an electronic device (e.g., a web engine 300 of the electronic device 100 of FIG. 1) may be constructed to have a structure, such as a page 310, a DOM tree 320, a render style tree 330, a render tree 340, and a selection control module 350. For example, the web engine 300 may represent a module executable in hardware constructions of various forms, such as a single processor of the electronic device, a multiprocessor, and the like.

The web engine 300 may load to the page 310 a web page document for displaying on the display 160. The web engine 300 may parse the web page document loaded to the page 310, and create the DOM tree 320 for a tag constructing the web page. The web engine 300 may create the render style tree 330 for layout information of the web page. Based on the DOM tree 320 and the render style tree 330, the web engine 300 may create the render tree 340 which includes style information of the web page and display rule thereof.

According to an embodiment of the present disclosure, if detecting an input for selection of at least a partial area of a web page through the input/output interface 150 of the electronic device 100, the web engine 300 may identify the area where the input is detected through the render tree 340. The web engine 300 may insert an attribute variable (e.g., a tag) for displaying selection information, to web page construction information (e.g., HTML information) about the area where the input is detected, and update the DOM tree 320. According to an embodiment of the present disclosure, the web engine 300 may extract the web page construction information (e.g., HTML information) of the area where the input is detected, and store the extracted web page construction information in the selection control module 350.

According to an embodiment of the present disclosure, if detecting an input for selection of at least a partial area of a web page through the input/output interface 150, the web engine 300 may update the render tree 340 and display the area where the input is detected on the display 160. The web engine 300 may insert an attribute variable (e.g., a tag) for displaying selection information, to web page construction information (e.g., HTML information) about the area where the input is detected, and update the DOM tree 320. The web engine 300 may extract the web page construction information (e.g., HTML information) of the area where the input is detected, and store the extracted web page construction information in the selection control module 350.

According to an embodiment of the present disclosure, the web engine 300 may extract web page construction information of at least one selected area and construct a show page. For example, the web engine 300 may search the DOM tree 320 for an attribute variable for displaying selection information, and identify at least one selected area. The web engine 300 may extract the web page construction information of the at least one selected area, and create the show page. For example, the web engine 300 may use the web page construction information of the at least one selected area stored in the selection control module 350, and create the show page.

According to an embodiment of the present disclosure, the web engine 300 may reconstruct a web page to hide the displaying of at least one selected area on the web page displayed on the display 160.

According to various embodiments of the present disclosure, an electronic device (e.g., the electronic device 100 of FIG. 1) may include a display for displaying a web page, an input/output interface for detecting a user input, and a processor for identifying at least a partial area of the web page corresponding to the user input detected through the input/output interface and, based on the at least partial area, changing at least a part of web page construction information. Based on the change of the at least part of the web page construction information by the processor, the display may display to distinguish the at least partial area from a remnant area on the web page.

In an embodiment of the present disclosure, the processor may insert an attribute variable to construction information of at least a partial area, and update a DOM tree of a web page.

In an embodiment of the present disclosure, the processor may insert an attribute variable to construction information of at least a partial area, and update a DOM tree of a web page and, based on the updated DOM tree, update a render tree of the web page, and, based on the updated render tree, render the web page. Based on rendering information by the processor, the processor may display to distinguish the at least partial area to which the attribute variable is inserted from a remnant area on the web page.

In an embodiment of the present disclosure, the processor may insert a tag for displaying selection information to markup language information of at least a partial area, and update a DOM tree of a web page.

In an embodiment of the present disclosure, the processor may identify at least one area to which an attribute variable is inserted, in a DOM tree of a web page, and extract construction information of the at least one area, and construct at least one page.

In an embodiment of the present disclosure, the processor may extract display data of at least one area to which an attribute variable is inserted, and construct at least one page.

In an embodiment of the present disclosure, the processor may extract HTML information of at least one area to which an attribute variable is inserted, and construct at least one page.

In an embodiment of the present disclosure, the processor may identify at least one area to which an attribute variable is inserted in a DOM tree of a web page, and control the display to restrict displaying of the at least one area on the web page displayed on the display.

In an embodiment of the present disclosure, the display may reconstruct and display a web page based on a size of at least one area of which displaying is restricted by the processor. In an embodiment of the present disclosure, the processor may store a construction of at least a partial area in a selection control module.

In an embodiment of the present disclosure, the processor may extract construction information of at least a partial area of a web page stored in the selection control module, and construct at least one page.

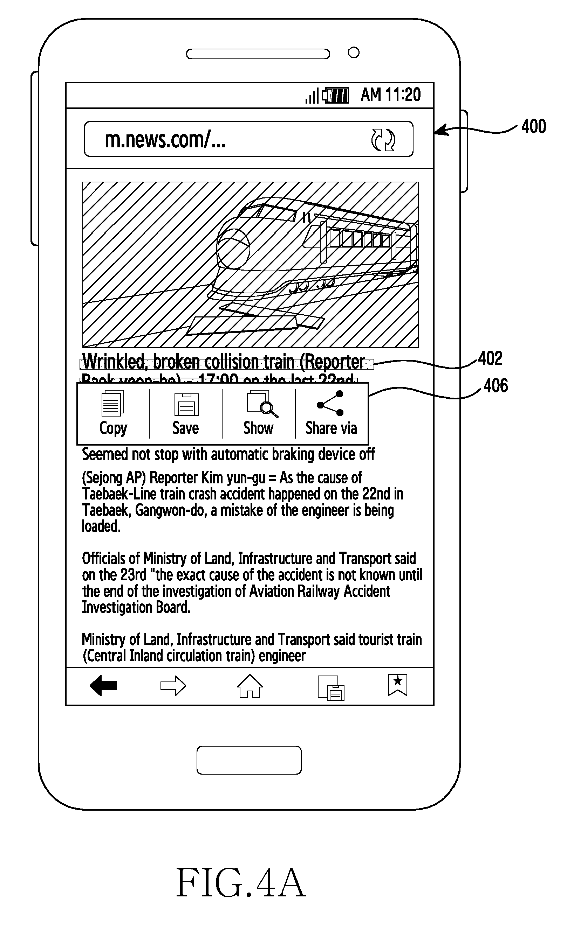

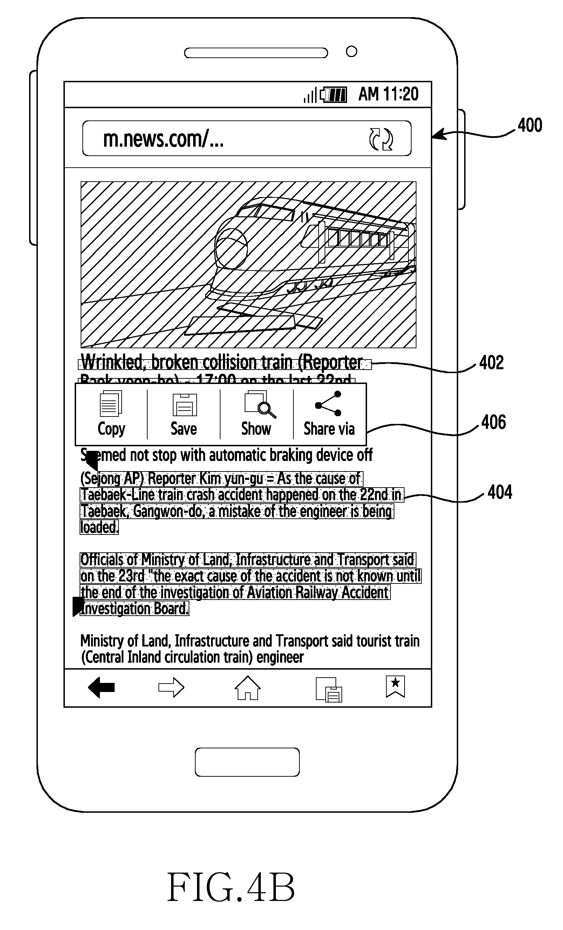

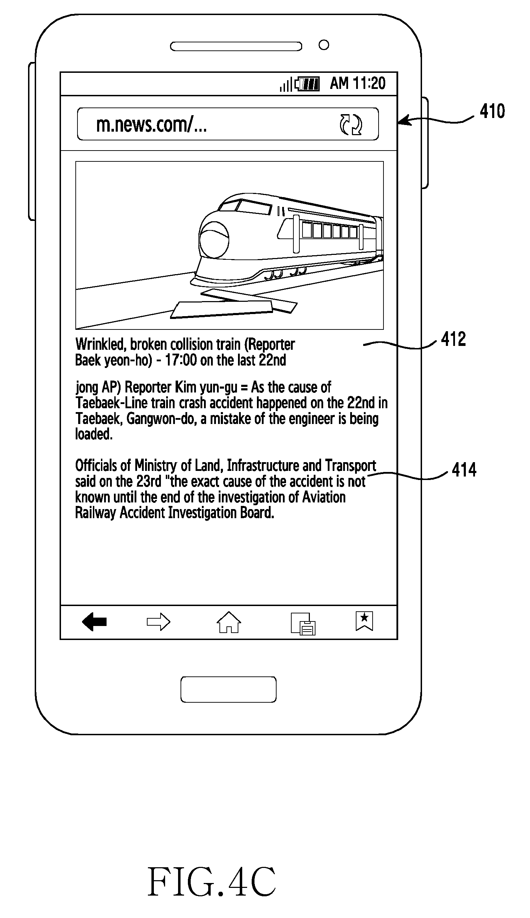

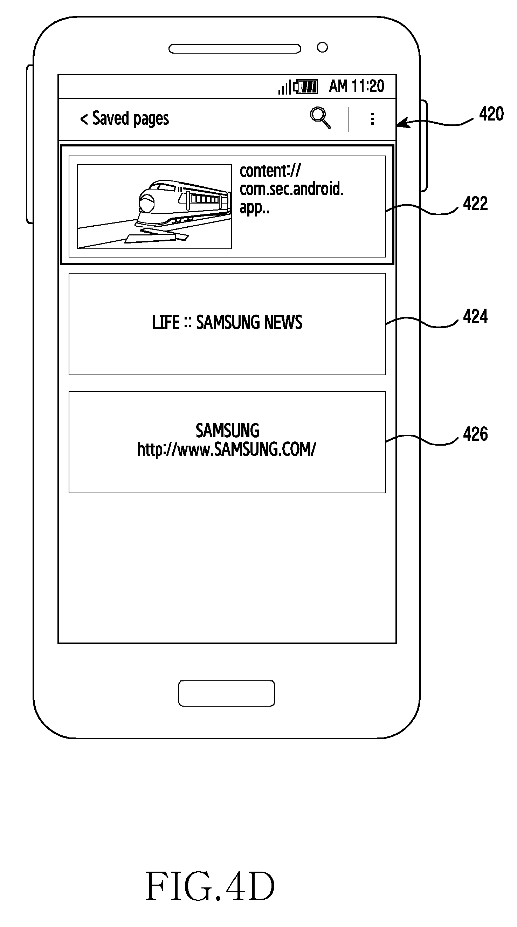

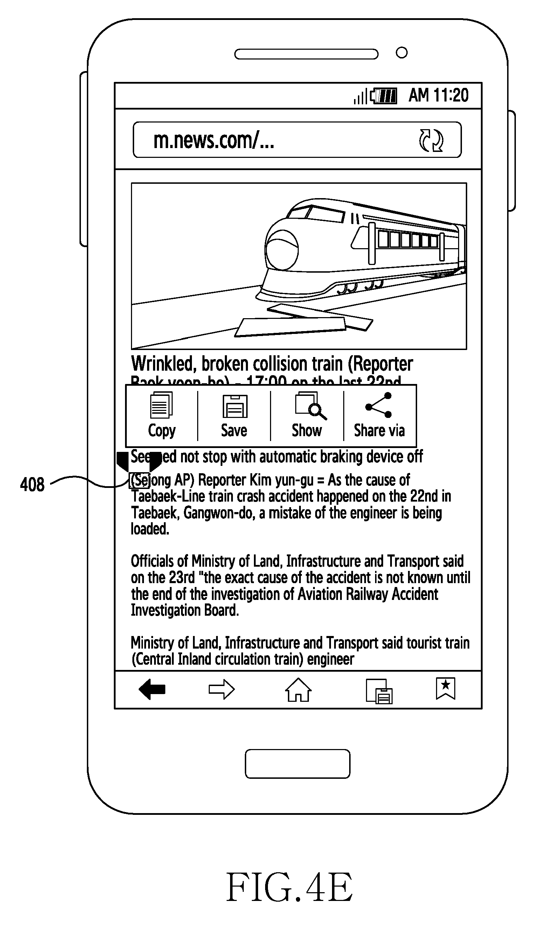

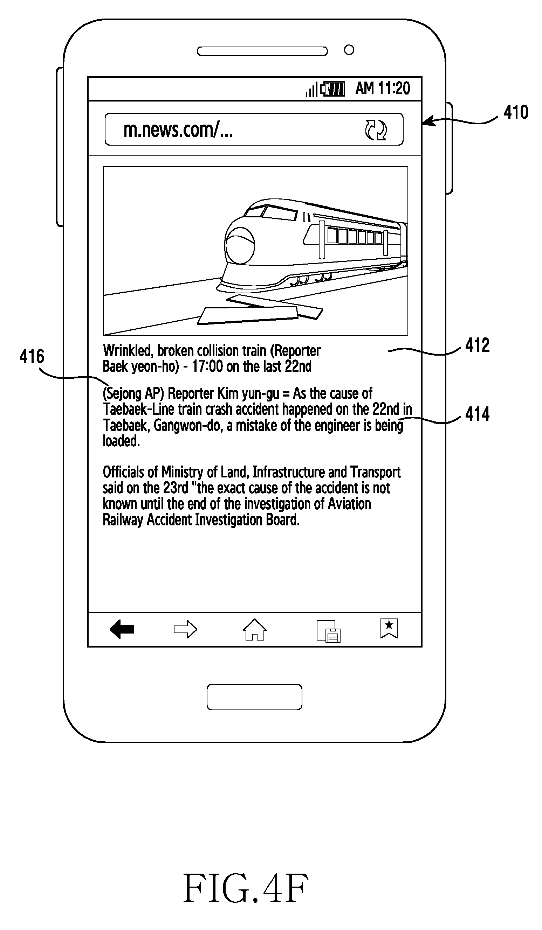

FIGS. 4A, 4B, 4C, 4D, 4E, and 4F illustrate screen constructions for selecting an area and managing the selected area on a web page according to various embodiments of the present disclosure.

Referring to FIGS. 4A, 4B, 4C, 4D, 4E, and 4F, according to an embodiment of the present disclosure, as in FIG. 4A, an electronic device (e.g., the electronic device 100 of FIG. 1) may render a web page document and display a web page 400 on a display 160.

According to an embodiment of the present disclosure, if detecting an input for selection of at least a partial area of a web page through the input/output interface 150, the electronic device may insert an attribute variable (e.g., a tag) for displaying selection information, to web page construction information of the area where the input is detected, and update a DOM tree. Based on DOM tree updating information, as in FIG. 4A, the electronic device may select and display an area 402 to which an attribute variable for displaying selection information is inserted, on the web page.

According to an embodiment of the present disclosure, if detecting an additional input for selection of at least a partial area of a web page through the input/output interface 150, the electronic device may insert an attribute variable for displaying selection information, to web page construction information of the area where the additional input is detected, and update a DOM tree. Based on DOM tree updating information, as in FIG. 4B, the electronic device may select and display areas 402 and 404 to which attribute variables for displaying selection information are inserted, on the web page.

According to an embodiment of the present disclosure, if detecting an input for selection of at least a partial area of a web page through the input/output interface 150, as in FIG. 4A, the electronic device may update a render tree and select and display the area 402 where the input is detected. The electronic device may insert an attribute variable (e.g., a tag) for displaying selection information to web page construction information of the area where the input is detected, and update a DOM tree.

According to an embodiment of the present disclosure, if detecting an additional input for selection of at least a partial area of a web page through the input/output interface 150, as in FIG. 4B, the electronic device may update a render tree and select and display the area 404 where the additional input is detected. Based on the updated DOM tree, as in FIG. 4B, the electronic device may maintain the displayed selection information of the area 402 to which the attribute variable for displaying selection information is inserted. The electronic device may insert an attribute variable for displaying selection information, to web page construction information of the area where the additional input is detected, and update the DOM tree.

According to an embodiment of the present disclosure, if detecting selection of at least a partial area of a web page, as in FIGS. 4A and 4B, the electronic device may display a control menu 406 for control of the area selected by input information, in at least a partial area of the display 160. For example, the control menu 406 may include a control function of at least one of copy, save, show, share or hide.

According to an embodiment of the present disclosure, if detecting an input corresponding to selection of a show function in the control menu 406, as in FIG. 4C, the electronic device may create a show page 410 including web page construction information 412 and 414 of at least one selected area, and display the show page 410 on the display 160.

According to an embodiment of the present disclosure, if detecting an input corresponding to selection of a save function in the control menu 406 or show page 410, the electronic device may save show pages. As in FIG. 4D, the electronic device may display on the display 160 a list 420 of previously saved show pages 422, 424, and 426.

According to an embodiment of the present disclosure, if detecting an input corresponding to selection of at least a partial area 408 of a web page as in FIG. 4E, based on detected input information, the electronic device may determine a position for displaying web page construction information of the selected area 408, in the show page 410 through the input/output interface 150. As in FIG. 4F, the electronic device may display web page construction information 416 of the selected area 408 in the position determined based on the input information.

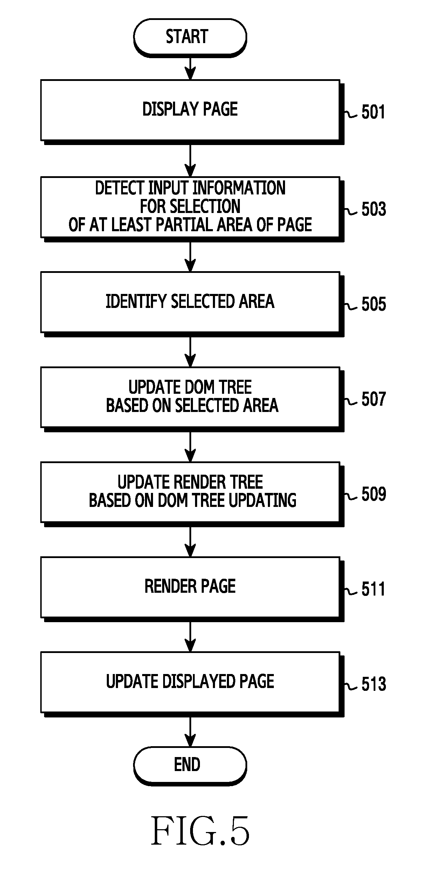

FIG. 5 illustrates a flowchart for displaying a selected area on a web page according to an embodiment of the present disclosure.

Referring to FIG. 5, in operation 501, an electronic device (e.g., the electronic device 100 of FIG. 1) may display a web page on a display (e.g., the display 160). For example, the electronic device may render a web page document provided from an external device or a web page document stored in the memory 130, to display the web page on the display 160.

In operation 503, the electronic device may detect input information for selection of at least a partial area of the web page displayed on the display 160 through the input/output interface 150. For example, if detecting a touch input to the at least partial area of the web page displayed on the display 160 when maintaining an input of a button included in a pen, the electronic device may determine that the electronic device detects the input information for the selection of the at least partial area of the web page.

In operation 505, the electronic device may identify the area selected based on the input information. For example, the electronic device may extract the area selected by the input information on the web page through a render tree.

In operation 507, based on the selected area, the electronic device may update a DOM tree corresponding to the web page. For example, the electronic device may insert an attribute variable (e.g., a tag) for displaying selection information, to web page construction information (e.g., HTML information) about the area selected by the input information, and update a DOM tree 320.

In operation 509, based on the updating of the DOM tree, the electronic device may update the render tree. For example, the electronic device may reconstruct or update the render tree such that the render tree corresponds to the DOM tree updated in operation 507.

In operation 511, the electronic device may use the updated render tree to render the web page.

In operation 513, the electronic device may use the updated render tree to update the web page displayed on the display 160 through the rendering of the web page. For example, the electronic device may exploit the updated render tree to change the area to which the attribute variable for displaying selection information is inserted by color corresponding to user's selection on the web page displayed on the display 160.

According to an embodiment of the present disclosure, if detecting an input for selection of at least a partial area of a web page, the electronic device may update a render tree, and select and display (e.g., 404 of FIG. 4B) the area where the input is detected on the web page displayed on the display 160. Based on the updated DOM tree, the electronic device may maintain (e.g., 402 of FIG. 4B) the displayed selection information of the area to which the attribute variable for displaying selection information is inserted.

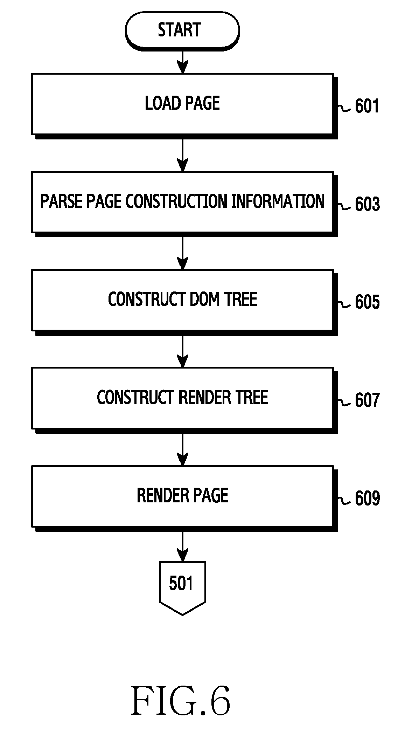

FIG. 6 illustrates a flowchart for displaying a web page according to an embodiment of the present disclosure. The following description is made for the operation for displaying the web page in operation 501 of FIG. 5.

Referring to FIG. 6, in operation 601, an electronic device (e.g., the electronic device 100 of FIG. 1) may load a web page document (e.g., an HTML document) for displaying on a display (e.g., the display 160). For example, the electronic device may load a web page document received from an external device or stored in the memory 130.

In operation 603, the electronic device may parse the loaded web page document.

In operation 605, based on parsing information about the web page document, the electronic device may create a DOM tree for at least one tag constructing a web page.

In operation 607, based on the DOM tree, the electronic device may create a render tree that includes style information of the web page and display rule thereof.

In operation 609, the electronic device may use the render tree to render the web page.

The electronic device may use the render tree to display the web page on the display 160 through the rendering of the web page (operation 501 of FIG. 5).

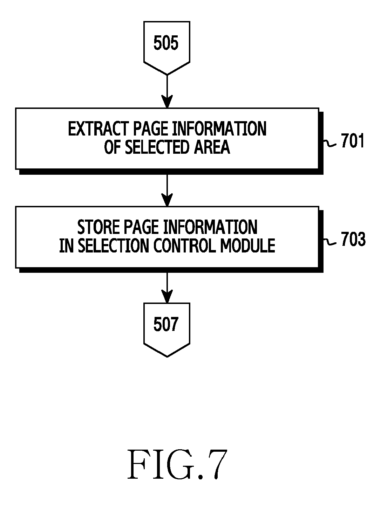

FIG. 7 illustrates a flowchart for extracting information of a selected area on a web page according to an embodiment of the present disclosure. The following description is made for the operation for extracting selected area information in order to update a DOM tree in operation 507 of FIG. 5.

Referring to FIG. 7, in operation 701, if identifying a selected area based on input information detected through an input/output interface (e.g., the operation 505 of FIG. 5), an electronic device (e.g., the electronic device 100 of FIG. 1) may extract web page construction information (e.g., HTML information) of the area selected by the input information.

In operation 703, the electronic device may store the extracted web page construction information in a selection control module. For example, the selection control module may be included in at least one position among the internal or external of a web engine constructed by software constructing and driving the web page.

In operation 703, the electronic device may insert an attribute variable (e.g., a tag) for displaying selection information, to the web page construction information (e.g., HTML information) stored in the selection control module, and update the DOM tree 320 (e.g., the operation 507 of FIG. 5).

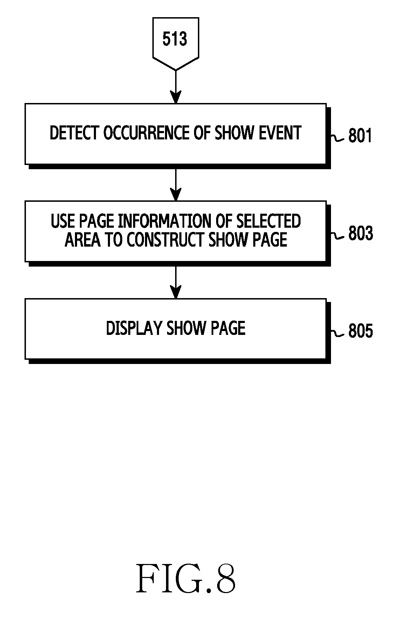

FIG. 8 illustrates a flowchart for constructing one show page using a selected area of a web page according to an embodiment of the present disclosure.

Referring to FIG. 8, in operation 801, if displaying selection information to at least one selected area on a web page displayed on the display 160 (e.g., the operation 513 of FIG. 5), an electronic device (e.g., the electronic device 100 of FIG. 1) may detect the occurrence of a show event. For example, in case of FIG. 4B, based on input information detected through the input/output interface 150, the electronic device may determine if selecting of a show function is detected in the control menu 406.

In operation 803, the electronic device may extract web page construction information of the at least one selected area, and construct a show page. For example, the electronic device may search a DOM tree of a web page (e.g., a DOM tree updated by inserting an attribute variable in operation 507 of FIG. 5) for an attribute variable for displaying selection information, and identify the at least one selected area. The electronic device may extract the web page construction information of the at least one selected area. For example, the electronic device may extract the web page construction information of the at least one selected area stored in the selection control module (e.g., an area stored in the selection control module in operation 703 of FIG. 7). For instance, the electronic device may extract display data (e.g., image data, text data, and the like) included in the at least one selected area, and create a show page (e.g., an electronic document). For instance, the electronic device may extract HTML information (e.g., a tag, a script, and the like) included in the at least one selected area, and create a show page (e.g., HTML document).

In operation 805, the electronic device may display the show page on the display 160.

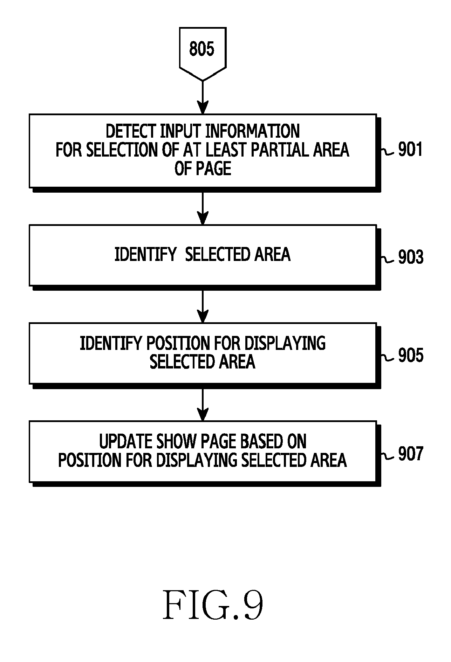

FIG. 9 illustrates a flowchart for adding a selected area to a show page on a web page according to an embodiment of the present disclosure.

Referring to FIG. 9, in operation 901, an electronic device (e.g., the electronic device 100 of FIG. 1) may detect input information for selection of at least a partial area of a web page. For example, the electronic device may identify if the input information for the selection of the at least partial area of the web page displayable through tab change is detected when displaying a show page on the display 160 in operation 805 of FIG. 8.

In operation 903, the electronic device may identify the area that is selected based on the input information.

In operation 905, the electronic device may identify a position for displaying the selected area on the show page. For example, based on the input information detected through the input/output interface 150, the electronic device may determine a position for displaying web page construction information of the selected area on the show page.

In operation 907, based on the position for displaying the selected area, the electronic device may update the show page. For example, the electronic device may add and display the web page construction information of the selected area to the show page displayed on the display 160 in operation 805 of FIG. 8.

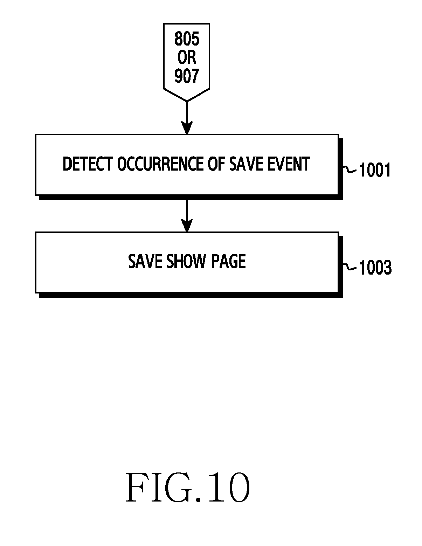

FIG. 10 illustrates a flowchart for saving a show page according to an embodiment of the present disclosure.

Referring to FIG. 10, in operation 1001, if displaying a web page on the display 160 (operation 805 of FIG. 8) or updating the web page displayed on the display 160 (operation 907 of FIG. 9), an electronic device may detect the occurrence of a save event. For example, in case of FIG. 4B, based on the input information detected through the input/output interface 150, the electronic device may identify if selection of a save function is detected in the control menu 406. For example, in case of FIG. 4C, based on the input information detected through the input/output interface 150, the electronic device may identify if selection of the save function for a show page is detected.

In operation 1003, the electronic device may save a previously created show page. For example, the electronic device may store construction information of each selected area included in the show page, in at least a partial area of the memory 130. For example, the electronic device may store the whole construction information of the show page in the at least partial area of the memory 130.

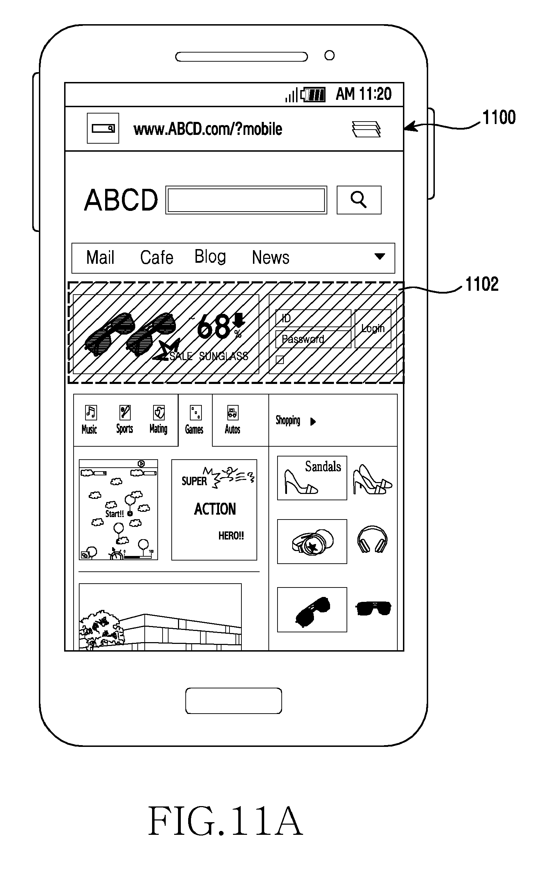

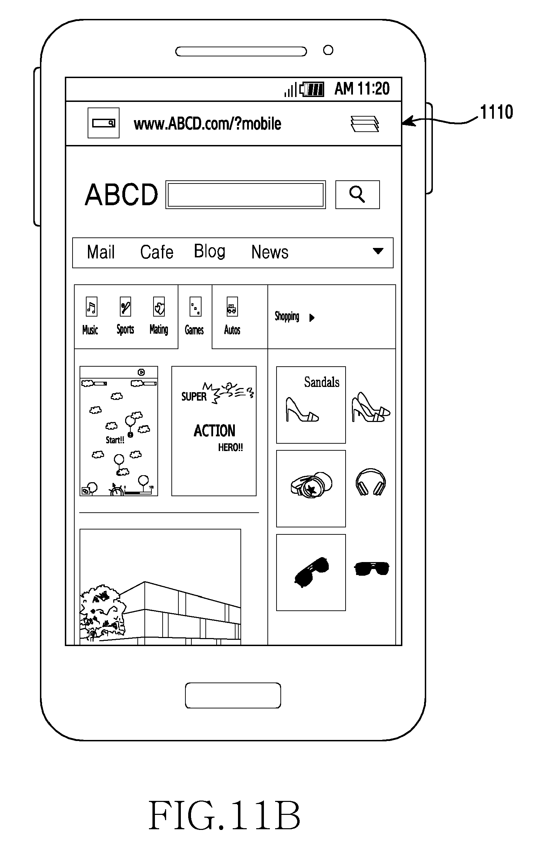

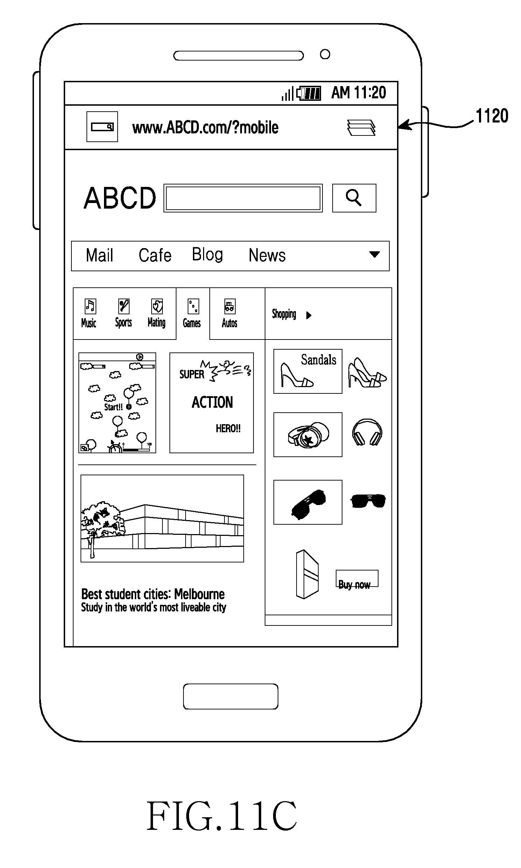

FIGS. 11A, 11B, and 11C illustrate screen constructions to hide displaying of a selected area on a web page according to various embodiments of the present disclosure.

Referring to 11A, 11B, and 11C, according to an embodiment of the present disclosure, if detecting an input for selection of at least a partial area of a web page through the input/output interface 150, as in FIG. 11A, an electronic device (e.g., the electronic device 100 of FIG. 1) may display at least a partial area 1102 of a web page 1100 displayed on the display 160 by color corresponding to user's selection.

According to an embodiment of the present disclosure, if detecting the occurrence of a hide event, the electronic device may search a DOM tree for an area to which an attribute variable for displaying selection information is inserted, and reconstruct a web page such that information of the corresponding area is not displayed, and display the reconstructed web page on the display 160. For example, as in FIG. 11B, the electronic device may change (e.g., magnify, reduce, and reconstruct) the web page based on a size of a selected area in which displaying on the display 160 is restricted, and display the changed web page on the display 160 (1110). For example, as in FIG. 11C, based on the size of the selected area in which displaying on the display 160 is restricted, the electronic device may display on the display 160 at least a partial area not displayed on the display 160 among the web page (1120).

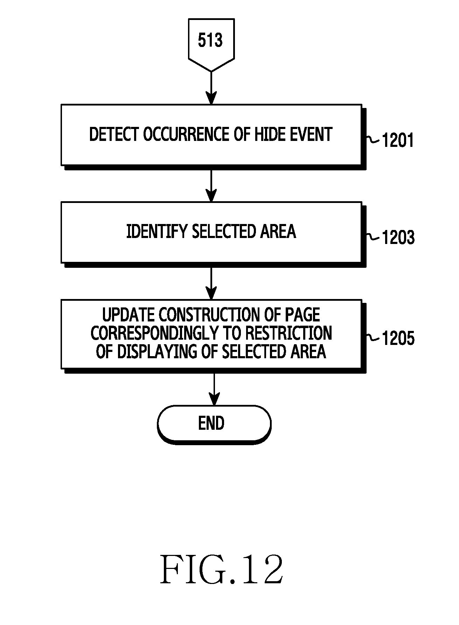

FIG. 12 illustrates a flowchart to hide displaying of a selected area on a web page according to an embodiment of the present disclosure.

Referring to FIG. 12, in operation 1201, if displaying selection information to at least one selected area on a web page displayed on the display 160 (e.g., the operation 513 of FIG. 5), the electronic device (e.g., the electronic device 100 of FIG. 1) may detect the occurrence of a hide event. For example, based on input information detected through the input/output interface 150, the electronic device may identify if selection of a hide function in a control menu displayed on the display 160 is detected.

In operation 1203, the electronic device may identify the selected area to hide displaying of a selected area on a web page. For example, the electronic device may search a DOM tree for an area to which an attribute variable for displaying selection information is inserted, and identify at least one selected area to hide displaying of a selected area on a web page.

In operation 1205, the electronic device may update the web page such that displaying of the at least one selected area is restricted and end the operation. For example, the electronic device may expand a size of the remnant area of the web page based on a size of the at least one selected area.

According to various embodiments of the present disclosure, a method for displaying an image in an electronic device (e.g., the electronic device 100 of FIG. 1) may include displaying a web page, identifying at least a partial area of the web page corresponding to an input, changing at least a part of construction information of the web page based on the at least partial area, and displaying to distinguish the at least partial area from the remnant area on the web page, based on the change.

In an embodiment of the present disclosure, the changing of the at least part of the construction information of the web page may include inserting an attribute variable to the construction information of the at least partial area, and updating a DOM tree of the web page.

In an embodiment of the present disclosure, the method may further include updating, after updating the DOM tree, a render tree of the web page based on the updated DOM tree, and rendering the web page based on the updated render tree. The displaying may include displaying to distinguish the at least partial area to which the attribute variable is inserted from the remnant area on the web page, based on rendering information.

In an embodiment of the present disclosure, the updating of the DOM tree may include inserting a tag for displaying selection information to markup language information of the at least partial area, and updating the DOM tree of the web page.

In an embodiment of the present disclosure, the method may further include identifying at least one area to which the attribute variable is inserted, in the DOM tree of the web page, and extracting construction information of the at least one area and constructing one page.

In an embodiment of the present disclosure, the constructing of the page may include extracting display data of the at least one area to which the attribute variable is inserted, and constructing at least one page.

In an embodiment of the present disclosure, the constructing of the page may further include extracting HTML information of the at least one area to which the attribute variable is inserted, and constructing at least one page.

In an embodiment of the present disclosure, the method may further include identifying at least one area to which the attribute variable is inserted, in the DOM tree of the web page, and controlling the display to restrict displaying of the at least one area on the displayed web page.

In an embodiment of the present disclosure, the reconstructing of the web page may include reconstructing the web page based on a size of the at least one area for restricting the displaying.

In an embodiment of the present disclosure, the method may further include, after identifying the at least partial area, storing a construction of the at least partial area in a selection control module of the electronic device.

In an embodiment of the present disclosure, the method may further include extracting construction information of the at least partial area of the web page stored in the selection control module, and constructing at least one page.

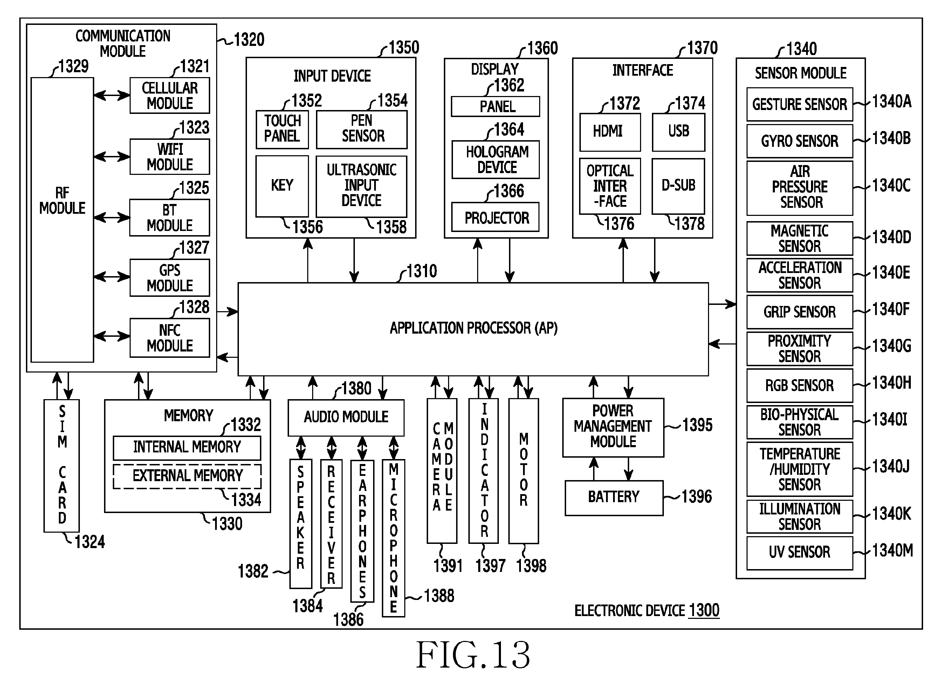

FIG. 13 illustrates a block diagram of an electronic device according to an embodiment of the present disclosure.

Referring to FIG. 13, an electronic device 1300 may, for example, construct the whole or part of the electronic device 100 illustrated in FIG. 1. The electronic device 1300 may include one or more application processors (APs) 1310, a communication module 1320, a subscriber identification module (SIM) card 1324, a memory 1330, a sensor module 1340, an input device 1350, a display 1360, an interface 1370, an audio module 1380, an image sensor module 1391, a power management module 1395, a battery 1396, an indicator 1397, or a motor 1398.

The AP 1310 may run an operating system or an application program to control a plurality of hardware or software constituent elements connected to the AP 1310, and may perform processing and operation of various data including multimedia data. The AP 1310 may be, for example, implemented as a system on chip (SoC). According to an embodiment of the present disclosure, the AP 1310 may further include a graphical processing unit (GPU) (not shown).

The communication module 1320 (e.g., the communication interface 170) may perform data transmission/reception in communication between the electronic device 1300 (e.g., the electronic device 101) and other electronic devices connected through a network. According to an embodiment of the present disclosure, the communication module 1320 may include a cellular module 1321, a WiFi module 1323, a BT module 1325, a GPS module 1327, an NFC module 1328, and a radio frequency (RF) module 1329.

The cellular module 1321 may provide a voice telephony, a video telephony, a text service, an Internet service, and the like, through a telecommunication network (e.g., LTE, LTE-A, CDMA, WCDMA, UMTS, WiBro, GSM, and the like). In addition, the cellular module 1321 may, for example, use a SIM (e.g., the SIM card 1324) to perform electronic device distinction and authorization within the telecommunication network. According to an embodiment of the present disclosure, the cellular module 1321 may perform at least some of functions that the AP 1310 may provide. For example, the cellular module 1321 may perform at least one part of a multimedia control function.

According to an embodiment of the present disclosure, the cellular module 1321 may include a communication processor (CP). In addition, the cellular module 1321 may be, for example, implemented as an SoC. In FIG. 13, the constituent elements, such as the cellular module 1321 (e.g., the CP), the memory 1330, the power management module 1395, and the like, are illustrated as constituent elements different from the AP 1310 but, according to an embodiment of the present disclosure, the AP 1310 may be implemented to include at least some (e.g., the cellular module 1321) of the aforementioned constituent elements.

According to an embodiment of the present disclosure, the AP 1310 or the cellular module 1321 (e.g., the CP) may load an instruction or data, which is received from a non-volatile memory connected to each or at least one of other constituent elements, to a volatile memory and process the loaded instruction or data. In addition, the AP 1310 or the cellular module 1321 may store in the non-volatile memory data, which is received from at least one of the other constituent elements or is generated by at least one of the other constituent elements.

The WiFi module 1323, the BT module 1325, the GPS module 1327 or the NFC module 1328 each may include, for example, a processor for processing data transmitted/received through the corresponding module. In FIG. 13, the cellular module 1321, the WiFi module 1323, the BT module 1325, the GPS module 1327 or the NFC module 1328 is each illustrated as a separate block but, according to an embodiment of the present disclosure, at least some (e.g., two or more) of the cellular module 1321, the WiFi module 1323, the BT module 1325, the GPS module 1327 or the NFC module 1328 may be included within one IC or IC package. For example, at least some (e.g., a CP corresponding to the cellular module 1321 and a WiFi processor corresponding to the WiFi module 1323) of the processors corresponding to the cellular module 1321, the WiFi module 1323, the BT module 1325, the GPS module 1327 or the NFC module 1328 may be implemented as one SoC.

The RF module 1329 may perform transmission/reception of data, for example, transmission/reception of an RF signal. Though not illustrated, the RF module 1329 may include, for example, a transceiver, a Power Amplifier Module (PAM), a frequency filter, a Low Noise Amplifier (LNA), and the like. In addition, the RF module 1329 may further include a component for transmitting/receiving an electromagnetic wave on a free space in wireless communication, for example, a conductor or a conductive wire, and the like. FIG. 13 illustrates that the cellular module 1321, the WiFi module 1323, the BT module 1325, the GPS module 1327 and the NFC module 1328 share one RF module 1329 with one another but, according to an embodiment of the present disclosure, at least one of the cellular module 1321, the WiFi module 1323, the BT module 1325, the GPS module 1327 or the NFC module 1328 may perform transmission/reception of an RF signal through a separate RF module.

According to an embodiment of the present disclosure, the RF module 1329 may include at least one antenna among a main antenna and a sub antenna which are operatively connected with the electronic device 1300. The communication module 1320 may use the main antenna and the sub antenna to support a multiple input multiple output (MIMO), such as diversity, and the like.

The SIM card 1324 may be a card including a SIM, and may be inserted into a slot provided in a specific position of the electronic device 1300. The SIM card 1324 may include unique identification information (e.g., an integrated circuit card ID (ICCID)) or subscriber information (e.g., an international mobile subscriber identity (IMSI)).

The memory 1330 may include an internal memory 1332 or an external memory 1334. The internal memory 1332 may include, for example, at least one of a volatile memory (e.g., a dynamic random access memory (DRAM), a static RAM (SRAM) and a synchronous DRAM (SDRAM)) or a non-volatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a not and (NAND) flash memory, and a not or (NOR) flash memory).

According to an embodiment of the present disclosure, the internal memory 1332 may be a solid state drive (SSD). The external memory 1334 may further include a flash drive, for example, compact flash (CF), secure digital (SD), micro-SD, mini-SD, extreme digital (xD), a memory stick, and the like. The external memory 1334 may be operatively connected with the electronic device 1300 through various interfaces. According to an embodiment of the present disclosure, the electronic device 1300 may further include a storage device (or a storage media), such as a hard drive.

The sensor module 1340 may measure a physical quantity or detect an activation state of the electronic device 1300, and convert measured or detected information into an electric signal. The sensor module 1340 may include, for example, at least one of a gesture sensor 1340A, a gyro sensor 1340B, an air pressure sensor 1340C, a magnetic sensor 1340D, an acceleration sensor 1340E, a grip sensor 1340F, a proximity sensor 1340G, a color sensor 1340H (e.g., a red, green, blue (RGB) sensor), a bio-physical sensor 1340I, a temperature/humidity sensor 1340J, an illumination sensor 1340K, a ultraviolet (UV) sensor 1340M, and the like. Additionally or alternatively, the sensor module 1340 may include, for example, an E-nose sensor (not shown), an electromyography (EMG) sensor (not shown), an electroencephalogram (EEG) sensor (not shown), an electrocardiogram (ECG) sensor (not shown), an infrared (IR) sensor (not shown), an iris sensor (not shown), a fingerprint sensor (not shown), and the like. The sensor module 1340 may further include a control circuit for controlling at least one or more sensors belonging therein.

The input device 1350 may include a touch panel 1352, a (digital) pen sensor 1354, a key 1356, an ultrasonic input device 1358, and the like. The touch panel 1352 may, for example, detect a touch input in at least one of a capacitive overlay scheme, a pressure sensitive scheme, an infrared beam scheme, or an acoustic wave scheme. In addition, the touch panel 1352 may further include a control circuit as well. In a case of the capacitive overlay scheme, physical contact or proximity detection is possible. The touch panel 1352 may further include a tactile layer as well. In this case, the touch panel 1352 may provide a tactile response to a user.

The (digital) pen sensor 1354 may be implemented in the same or similar method to receiving a user's touch input or by using a separate sheet for detection. The key 1356 may include, for example, a physical button, an optical key, or a keypad. The ultrasonic input device 1358 is a device capable of identifying data by detecting a sound wave in the electronic device 1300 through an input tool generating an ultrasonic signal, and enables wireless detection. According to an embodiment of the present disclosure, the electronic device 1300 may also use the communication module 1320 to receive a user input from an external device (e.g., a computer or a server) connected with this.

The display 1360 (e.g., the display 160) may include a panel 1362, a hologram device 1364, or a projector 1366. The panel 1362 may be, for example, an LCD, an Active-Matrix Organic LED (AMOLED), and the like. The panel 1362 may be, for example, implemented to be flexible, transparent, or wearable. The panel 1362 may be constructed as one module along with the touch panel 1352 as well. The hologram device 1364 may use interference of light to show a three-dimensional image in the air. The projector 1366 may project light to a screen to display an image. The screen may be, for example, located inside or outside the electronic device 1300. According to an embodiment of the present disclosure, the display 1360 may further include a control circuit for controlling the panel 1362, the hologram device 1364, or the projector 1366.

The interface 1370 may include, for example, an HDMI 1372, a USB 1374, an optical interface 1376, or a D-subminiature (D-sub) 1378. Additionally or alternatively, the interface 1370 may include, for example, a mobile high-definition link (MHL) interface, a SD card / multi media card (MMC) interface or an infrared data association (IrDA) standard interface.

The audio module 1380 may convert a voice and an electric signal interactively. The audio module 1380 may, for example, process sound information which is inputted or outputted through a speaker 1382, a receiver 1384, an earphone 1386, the microphone 1388, and the like.

The image sensor module 1391 is a device able to take a still picture and a moving picture. According to an embodiment of the present disclosure, the image sensor module 1391 may include one or more image sensors (e.g., a front sensor or a rear sensor), a lens (not shown), an image signal processor (ISP) (not shown), or a flash (not shown) (e.g., an LED or a xenon lamp).

The power management module 1395 may manage electric power of the electronic device 1300. Though not illustrated, the power management module 1395 may include, for example, a power management integrated circuit (PMIC), a charger IC, a battery, a fuel gauge, and the like.

The PMIC may be, for example, mounted within an integrated circuit or an SoC semiconductor. A charging scheme may be divided into a wired charging scheme and a wireless charging scheme. The charger IC may charge the battery 1396, and may prevent the inflow of overvoltage or overcurrent from an electric charger. According to an embodiment of the present disclosure, the charger IC may include a charger IC for at least one of the wired charging scheme or the wireless charging scheme. The wireless charging scheme may, for example, be a magnetic resonance scheme, a magnetic induction scheme, an electromagnetic wave scheme, and the like. A supplementary circuit for wireless charging, for example, a circuit, such as a coil loop, a resonance circuit, a rectifier, and the like, may be added.

The battery gauge may, for example, measure a level of the battery 1396, a voltage during charging, a current or a temperature. The battery 1396 may generate or store electricity, and use the stored or generated electricity to supply power to the electronic device 1300. The battery 1396 may include, for example, a rechargeable battery or a solar battery.

The indicator 1397 may display a specific status of the electronic device 1300 or one part (e.g., the AP 1310) thereof, for example a booting state, a message state, a charging state, and the like. The motor 1398 may convert an electric signal into a mechanical vibration. Though not illustrated, the electronic device 1300 may include a processing device (e.g., a GPU) for mobile TV support. The processing device for mobile TV support may, for example, process media data according to the standards of digital multimedia broadcasting (DMB), digital video broadcasting (DVB), a media flow, and the like.

According to various embodiments of the present disclosure, an electronic device may insert an attribute variable (e.g., a tag) for displaying selection information to at least one area of a web page selected by input information, thereby displaying a plurality of areas selected by a user on the web page.

According to various embodiments of the present disclosure, the electronic device may extract and store construction information of the at least partial area of the web page to which the attribute variable for displaying selection information is inserted, thereby separately managing areas selected by the user.

The term "module" as used herein may, for example, describe a unit including one of hardware, software, and firmware or a combination of two or more of them. The "module" may be interchangeably used with, for example, the term "unit", "logic", "logical block", "component", "circuit," and the like. The "module" may be a minimum unit of an integrated component element or a part thereof. The "module" may be a minimum unit for performing one or more functions or a part thereof. The "module" may be mechanically or electronically implemented. For example, the "module" according to the present disclosure may include at least one of an application-specific integrated circuit (ASIC) chip, a field-programmable gate arrays (FPGA), and a programmable-logic device for performing operations which has been known or are to be developed hereinafter.

According to various embodiments of the present disclosure, at least some of the devices (e.g., modules or functions thereof) or the method (e.g., operations) according to the present disclosure may be implemented by a command stored in a computer-readable storage medium in a programming module form. The instruction, when executed by a processor (e.g., the processor 120), may cause the one or more processors to execute the function corresponding to the instruction. The computer-readable storage medium may be, for example, the memory 130.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a Read-Only Memory (ROM), a Random-Access Memory (RAM), Compact Disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

The programming module according to the present disclosure may include one or more of the aforementioned components or may further include other additional components, or some of the aforementioned components may be omitted. Operations executed by a module, a programming module, or other component elements according to various embodiments of the present disclosure may be executed sequentially, in parallel, repeatedly, or in a heuristic manner. Further, some operations may be executed according to another order or may be omitted, or other operations may be added. Further, various embodiments disclosed in this document are only for the description and understanding of technical contents and do not limit the scope of the present disclosure. Accordingly, the scope of the present disclosure should be construed as including all modifications or various other embodiments based on the technical idea of the present disclosure.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a display configured to display a web page;
an input interface configured to detect an input; and
a processor configured to:
identify at least a partial area of the web page corresponding to the input detected through the input interface, and
change at least a part of construction information of the web page based on the at least partial area,
wherein the display is further configured to distinguish the at least partial area from a remnant area on the web page, based on the change of the at least part of the construction information of the web page by the processor.

2. The electronic device of claim 1, wherein the processor is further configured to insert an attribute variable to the construction information of the at least partial area and update a DOM tree of the web page.

3. The electronic device of claim 2,
wherein the processor is further configured to:
insert the attribute variable to the construction information of the at least partial area,
update the DOM tree of the web page,
update a render tree of the web page based on the updated DOM tree, and
render the web page based on the updated render tree, and
wherein the processor is further configured to display to distinguish the at least partial area to which the attribute variable is inserted from the remnant area on the web page, based on rendering information by the processor.

4. The electronic device of claim 2 or claim 3, wherein the processor is further configured to:
insert a tag for displaying selection information to markup language information of the at least partial area, and
update the DOM tree of the web page.

5. The electronic device of any one of claims 2 to 4, wherein the processor is further configured to:
identify at least one area to which the attribute variable is inserted, in the DOM tree of the web page,
extract construction information of the at least one area, and
construct one page.

6. The electronic device of claim 5, wherein the processor is further configured to:
extract at least one of display data or hypertext markup language (HTML) information of the at least one area to which the attribute variable is inserted, and
construct at least one page.

7. The electronic device of any one of claims 2 to 6, wherein the processor is further configured to:
identify at least one area to which the attribute variable is inserted in the DOM tree of the web page, and
control the display to restrict displaying of the at least one area on the web page displayed on the display.

8. The electronic device of claim 7, wherein the display is further configured to:
reconstruct the web page based on a size of the at least one area of which displaying is restricted by the processor, and
display the reconstructed web page.

9. The electronic device of any preceding claim, wherein the processor is further configured to:
store a construction of the at least partial area in a selection control module of the electronic device,
extract construction information of the at least partial area of the web page stored in the selection control module, and
construct at least one page.

10. A method for displaying an image in an electronic device, the method comprising:
displaying a web page;
identifying at least a partial area of the web page corresponding to an input;
changing at least a part of construction information of the web page based on the at least partial area; and
displaying to distinguish the at least partial area from a remnant area on the web page, based on the change.

11. The method of claim 10, wherein the changing of the at least part of the construction information of the web page comprises inserting an attribute variable to the construction information of the at least partial area, and updating a DOM tree of the web page.

12. The method of claim 11, further comprising:
updating, after updating the DOM tree, a render tree of the web page based on the updated DOM tree; and
rendering the web page based on the updated render tree,
wherein the displaying of distinguishing the at least partial area from the remnant area on the web page comprises displaying to distinguish the at least partial area to which the attribute variable is inserted from the remnant area on the web page, based on rendering information.

13. The method of claim 11 or claim 12, wherein the updating of the DOM tree comprises inserting a tag for displaying selection information to markup language information of the at least partial area, and updating the DOM tree of the web page.

14. The method of any one of claims 11 to 13, further comprising:
identifying at least one area to which the attribute variable is inserted, in the DOM tree of the web page; and
extracting construction information of the at least one area and constructing one page.

15. The method of claim 14, wherein the constructing of the page comprises extracting at least one of display data or hypertext markup language (HTML) information of the at least one area to which the attribute variable is inserted, and constructing at least one page.
